# EUROPÄISCHE PATENTSCHRIFT

(11) **EP 1 176 076 B1**
(45) Veröffentlichungstag und Bekanntmachung des Hinweises auf die Patenterteilung: **09.06.2004**
(21) Anmeldenummer: 01117699.7
(22) Anmeldetag: 26.07.2001
(51) Int. Cl.: B60T 15/02

(54) **Bremssystem mit Luftdruck für Schienenfahrzeuge**
Brake system with compressed air for rail vehicles
Système de freinage à air compressé pour véhicules ferroviaires

(30) Priorität: 28.07.2000 DE 10037267
(43) Veröffentlichungstag der Anmeldung: 30.01.2002
(73) Patentinhaber: SIEMENS AKTIENGESELLSCHAFT, 80333 München (DE)
(72) Erfinder: Huber, Martin, 85256 Vierkirchen (DE); Lege, Burkhard, Dr., 78333 Stockach (DE); Pösel, Bernhard, 38154 Königslutter (DE)

(56) Entgegenhaltungen:
- DE-A- 2 106 337
- DE-B- 2 555 363

## Beschreibung

Die Erfindung betrifft ein Bremssystem für eine Lokomotive mit einer Hauptluftleitung, der ein Entlüftungsventil zugeordnet ist, wobei dem Entlüftungsventil ein Absperrventil vorgeschaltet ist.

Eine Lokomotive, die mit einem oder mehreren Zugsicherungssystemen ausgerüstet ist, muss eine oder mehrere Einrichtungen für Zwangsbremseingriffe besitzen, die es den Zugsicherungssystemen ermöglichen, die Hauptluftleitung der Lokomotive, z.B. über das Entlüftungsventil zu entlüften und damit eine Bremsung einzuleiten. Die Zwangsbremseingriffe müssen hoch zuverlässig sein, da sie sicherheitsrelevant sind. Lokomotive steht für ein beliebiges Schienentriebfahrzeug.

Aus der DE 25 55 363 A ist eine Notbremseinrichtung bekannt, bei der in Folge einer Betätigung der Notbremse ein elektrisches Signal beim Lokomotivführer eintrifft, der darauf hin manuell ein Hilfsventil schließen kann, um die Entlüftung der Hauptluftleitung zu verhindern. Damit wird das Anhalten des Zuges verzögert, damit er nicht in einem Tunnel oder auf einer Brücke anhält.

Aus der DE 21 06 337 A ist eine Gleitschutzeinrichtung für Fahrzeugräder bekannt, bei der durch Hintereinanderschalten mehrerer Ventile, die aufeinander einwirken, ein zeitweises Lösen einer bereits betätigten Bremse erreicht wird, um ein Gleiten der Räder und damit einen verlängerten Bremsweg zu vermeiden.

Es ist bereits bekannt, dass nach dem Einschalten einer Lokomotive, während die Elektronik der Zugsicherungssysteme hoch läuft, Selbsttests durchgeführt werden. Sollte während dieser Tests durch die Elektronik eine Zwangsbremsung gefordert werden, soll nicht gebremst werden, selbst dann nicht, wenn das Entlüftungsventil geöffnet wird. Die Hauptluftleitung soll also nicht entlüftet werden.

Der Erfindung liegt die Aufgabe zugrunde, ein Bremssystem anzugeben, mit dem ohne zusätzliche Bedienhandlung gewährleistet ist, dass während die Elektronik der Zugsicherungssysteme hoch läuft, keine Entlüftung der Hauptluftleitung möglich ist. Außerdem soll mit einfachen Mitteln ein Abschleppen der Lokomotive möglich sein.

Die Aufgabe wird gemäß der Erfindung dadurch gelöst, dass das Absperrventil mit einer Steuerleitung verbunden ist, die von einem druckführenden System zur Erzeugung eines Steuerdrucks ausgeht, dass das Absperrventil bei hohem Steuerdruck offen und bei niedrigem Steuerdruck geschlossen ist und dass sich in der Steuerleitung eine Drossel befindet.

Falls z.B. beim Aufrüsten der Lokomotive vor der Inbetriebnahme der Steuerdruck in der Steuerleitung steigt, wird der Steuerraum des Absperrventils, bedingt durch die Drossel verlangsamt vom Druck beaufschlagt, so dass das Absperrventil zeitverzögert öffnet und die Bremse zeitverzögert in Betrieb setzt. Während dieser Zeitspanne kann vorteilhaft ein kurzzeitiges Öffnen des Entlüftungsventils während einer Systemüberprüfung nicht zur Entlüftung der Hauptluftleitung und zum Bremsen führen. Es kann also während einer Systemüberprüfung vor dem Anfahren der Lokomotive nicht zu einer Zwangsbremsung kommen.

Es wird außerdem der Vorteil erzielt, dass es zum Abschleppen einer Lokomotive ausreicht, wenn nur das Absperrventil geschlossen ist. Es müssen also nicht mehrere Ventile betätigt werden.

Beispielsweise ist parallel zur Drossel ein vom Absperrventil weg durchlässiges Rückschlagventil angeordnet. Dadurch kann das Absperrventil, obwohl es nur zeitverzögert zu öffnen ist, schnell in den Schließzustand überführt werden. Man kann also bei Bedarf durch Erniedrigen des Steuerdruckes in der Steuerleitung den Steuerraum des Absperrventils über das Rückschlagventil schnell vom Druck entlasten, so dass das Absperrventil schnell schließt und die Bremse löst. Das ist vorteilhaft einsetzbar, wenn die Lokomotive abgeschleppt werden soll.

Während das Absperrventil nur zeitverzögert zu öffnen ist, kann es also schnell in den Schließzustand überführt werden.

Mit der Drossel ist beispielsweise ein Luftbehälter in Serie geschaltet. Dieser wirkt sich beim Druckabbau im Steuerraum nur wenig aus. Bei einem Druckaufbau im Steuerraum über die Drossel bewirkt der Luftbehälter jedoch, dass über die Drossel ein um das Volumen des Luftbehälters vergrößertes Luftvolumen zugeleitet werden muss, bevor das Absperrventil öffnet.

Die zeitliche Verzögerung zwischen einem Druckanstieg in der Steuerleitung des Absperrventils und dem Öffnen des Absperrventils wird dadurch weiter vergrößert.

Mit der Erfindung wird insbesondere der Vorteil erzielt, dass bei einem Test eines Zugsicherungssystems, insbesondere im Depot, ein Entlüften der Hauptluftleitung verhindert wird.

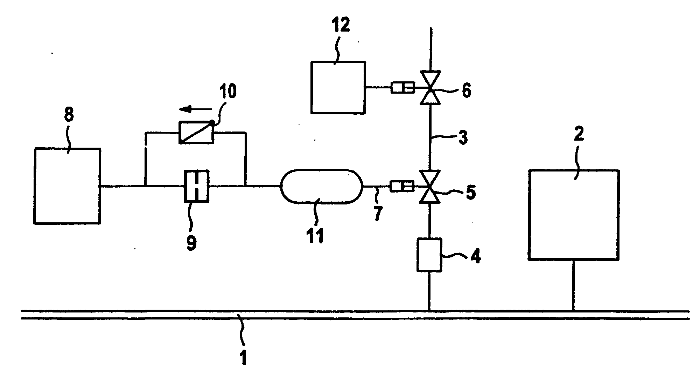

Das Bremssystem nach der Erfindung wird anhand der Zeichnung näher erläutert:

Von einer Hauptluftleitung 1, die mit einem Bremssystem 2 verbunden ist, geht eine Entlüftungsleitung 3 aus, in die ein Filter 4, ein Absperrventil 5 und ein Entlüftungsventil 6 hintereinander eingebunden sind. Das Bremssystem 2, das aus mehreren Bremsen bestehen kann, ist unwirksam, solange der erforderliche Druck in der Hauptluftleitung 1 vorhanden ist. Durch Öffnen des Entlüftungsventils 6 wird das Bremssystem 2 in der Regel aktiviert.

Das Absperrventil 5 ist über eine Steuerleitung 7, die von einem als solchen bekannten Vielfachabsperrhahn 8 ausgeht, mit einem Steuerdruck beaufschlagbar. Wenn der Vielfachabsperrhahn 8 die Steuerleitung 7 mit einem druckführenden System, z.B. mit einem Kompressor, verbindet, ist das Absperrventil 5 geöffnet und die Hauptluftleitung 1 ist entlüftet, was das Bremssystem 2 aktiviert. Zum Deaktivieren des Bremssystems 2, was zum Abschleppen der Lokomotive nötig ist, reicht es aus, wenn die Steuerleitung 7 durch den Vielfachabsperrhahn 8 entlüftet wird. Dann schließt das Absperrventil 5 und in der Hauptluftleitung 1 kann sich wieder ein Druck aufbauen und das Bremssystem 2 öffnen (kein Bremsen).

Insbesondere im Depot wird die Elektronik von Zugsicherungssystemen getestet, die auf das Entlüftungsventil 6 einwirken. Während dieser Selbsttests soll es nicht zur Entlüftung der Hauptluftleitung 1 über das Entlüftungsventil 6 kommen. Dazu sollen keine zusätzlichen Bedienhandlungen notwendig sein. Zur Lösung dieser Aufgabe dient das Absperrventil 5, mit dem die Entlüftungsleitung 3 während des Selbsttests geschlossen gehalten werden kann, so dass der Schaltzustand des Entlüftungsventils 6 keine Rolle spielt.

In der Steuerleitung 7 befindet sich eine Drossel 9. Parallel zur Drossel 9 ist ein vom Absperrventil 5 weg durchlässiges Rückschlagventil 10 angeordnet.

Wenn der Druck in der Seuerleitung 7 ansteigt, bleibt das Absperrventil 5 zunächst noch geschlossen, da sich der Druck in seinem Steuerraum bedingt durch die Drossel 9 nur langsam aufbauen kann. Der Druckaufbau wird noch weiter verlangsamt durch einen Luftbehälter 11, der mit der Drossel 9 in Serie geschaltet ist und gefüllt werden muss, bevor sich der Druckaufbau auf das Absperrventil 5 auswirken kann.

Das Absperrventil 5 wird beim Aufrüsten der Lokomotive durch die Verzögerung erst dann geöffnet, wenn Selbsttests des Zugsicherungssystems 12, die sich auf die Stellung des Entlüftungsventils 6 auswirken können, abgeschlossen sind.

Wenn zum Schließen des Absperrventils 5 die Steuerleitung 7 z.B. am vorher geschlossenen Vielfachabsperrhahn 8 entlüftet wird, sinkt der Druck über das Rückschlagventil 10 schnell und nicht zeitverzögert ab. Das Absperrventil 5 kann folglich ohne Verzögerung geschlossen werden, falls das erforderlich ist. Beispielsweise zum Abschleppen der Lokomotive ist durch das Schließen des Absperrventils 5 sichergestellt, dass nicht gebremst wird. Es kommt beim Entlüften der Steuerleitung 7 nicht zu einer zeitlichen Verzögerung bei der Schaltung des Absperrventils 5.

Es wird der Vorteil erzielt, dass durch das Absperrventil 5 in Verbindung mit der Drossel 9 und dem Rückschlagventil 10, insbesondere auch mit dem Luftbehälter 11, die Entlüftungsleitung 3 beim Aufrüsten der Lokomotive nur zeitverzögert geöffnet wird, um Selbsttests am Zugsicherungssystem 12 zu ermöglichen. Andererseits ist ein schnelles, unverzögertes Schließen des Absperrventils 5 aufgrund des Rückschlagventils 10 möglich ist, so dass das Bremssystem 2 in einfacher Weise für das Abschleppen der Lokomotive offen gehalten, also nicht bremsend gehalten werden kann.

## Patentansprüche

1. Bremssystem (2) für eine Lokomotive mit einer Hauptluftleitung (1), der ein Entlüftungsventil (6) zugeordnet ist, wobei dem Entlüftungsventil (6) ein Absperrventil (5) vorgeschaltet ist,
**dadurch gekennzeichnet, dass** das Absperrventil (5) mit einer Steuerleitung (7) verbunden ist, die von einem druckführenden System zur Erzeugung eines Steuerdruckes ausgeht, dass das Absperrventil (5) bei hohem Steuerdruck offen und bei niedrigem Steuerdruck geschlossen ist und dass sich in der Steuerleitung (7) eine Drossel (9) befindet.

2. Bremssystem nach Anspruch 1,
**dadurch gekennzeichnet, dass** parallel zur Drossel (9) ein vom Absperrventil (5) weg durchlässiges Rückschlagventil (10) angeordnet ist.

3. Bremssystem nach einem der Ansprüche 1 oder 2,
**dadurch gekennzeichnet, dass** mit der Drossel (9) ein Luftbehälter (11) in Serie geschaltet ist.

## Claims

1. Braking system (2) for a locomotive with a main air pipe (1) to which is assigned a deaerating valve (6), a shut-off valve (5) being connected upstream the deaerating valve (6), **characterised in that** the shut-off valve (5) is connected to a control line (7) issuing from a pressure-conducting system for generating a control pressure, the shut-off valve (5) is open when the control pressure is high and closed when the control pressure is low and there is a throttle (9) in the control line (7).

2. Braking system according to claim 1, **characterised in that** a non-return valve (10) which transmits away from the shut-off valve (5) is arranged parallel to the throttle (9).

3. Braking system according to one of claims 1 or 2, **characterised in that** an air reservoir (11) is connected in series to the throttle (9).

## Revendications

1. Système (2) de freinage d'une locomotive, comprenant un conduit (1) principal d'air auquel est associée une vanne (6) de purge, une vanne (5) d'arrêt étant montée en amont de la vanne (6) de purge,
**caractérisé en ce que** la vanne (5) d'arrêt communique avec un conduit (7) de commande, qui part d'un système conduisant la pression pour la production d'une pression de commande, **en ce que** la vanne (5) d'arrêt est ouverte lorsque la pression de commande est haute et est fermée lorsque la pression de commande est basse, et **en ce qu'**il y a un étranglement (9) dans le conduit (7) de commande.

2. Système de freinage suivant la revendication 1,
**caractérisé en ce qu'**un clapet (10) anti-retour autorisant le passage en s'éloignant de la vanne (5) d'arrêt est monté en parallèle à l'étranglement (9).

3. Système de freinage suivant l'une des revendications 1 ou 2,
**caractérisé en ce qu'**un ballon (11) à air est monté en série avec l'étranglement (9).
